Europäisches Patentamt

European Patent Office

Office européen des brevets

(19)

(11) **EP 1 002 450 B1**

(12) **EUROPÄISCHE PATENTSCHRIFT**

(45) Veröffentlichungstag und Bekanntmachung des Hinweises auf die Patenterteilung:
**16.10.2002 Patentblatt 2002/42**

(21) Anmeldenummer: **98944998.8**

(22) Anmeldetag: **16.07.1998**

(51) Int Cl.$^7$: **H05B 41/392**, H05B 41/288

(86) Internationale Anmeldenummer:
**PCT/DE98/01993**

(87) Internationale Veröffentlichungsnummer:
**WO 99/008492 (18.02.1999 Gazette 1999/07)**

(54) **VERFAHREN ZUM BETREIBEN EINER GLEICHSTROM-METALLHALOGENIDBOGENLAMPE UND ZUGEHÖRIGE SCHALTUNGSANORDNUNG**

METHOD FOR OPERATING A DIRECT CURRENT METAL HALOGEN ARC LAMP AND CIRCUIT PERTAINING THERETO

PROCEDE POUR FAIRE FONCTIONNER UNE LAMPE A ARC A HALOGENURES METALLIQUES A COURANT CONTINU, ET CIRCUIT ASSOCIE

(84) Benannte Vertragsstaaten:
**BE CH DE FR GB IT LI NL**

(30) Priorität: **05.08.1997 DE 19733806**

(43) Veröffentlichungstag der Anmeldung:
**24.05.2000 Patentblatt 2000/21**

(73) Patentinhaber: **Patent-Treuhand-Gesellschaft für elektrische Glühlampen mbH**
**81543 München (DE)**

(72) Erfinder: **WERNER, Frank**
**D-13583 Berlin (DE)**

(56) Entgegenhaltungen:
| | |
|---|---|
| **EP-A- 0 334 355** | **DE-A- 2 236 973** |
| **DE-A- 2 525 408** | **DE-A- 2 705 540** |
| **DE-A- 3 636 901** | **DE-A- 3 920 675** |
| **DE-A- 4 301 184** | **DE-A- 4 301 256** |
| **US-A- 4 904 903** | **US-A- 5 051 665** |

EP 1 002 450 B1

**Beschreibung**

**Technisches Gebiet**

Die vorliegende Erfindung betrifft ein Verfahren zum Betreiben einer Gleichstrom-Metallhalogenidbogenlampe gemäß Anspruch 1, eine zugehörige Schaltungsanordnung gemäß Anspruch 10 sowie ein Verfahren zum Betreiben einer Rechteckwechselstrom-Metallhalogenidbogenlampe gemäß Anspruch 17.

Gleichstrom-Metallhalogenidbogenlampen werden beispielsweise für Projektionsanwendungen benötigt. Für eine gute Farbwiedergabe sollte das Spektrum im Ort der höchsten Leuchtdichte, also vor der Kathode, ausreichende Anteile der Grundfarben Blau, Grün und Rot enthalten. Es ist bekannt, die Füllungselemente Indium für Blau und Lithium für Rot zu verwenden. Bei üblichen Projektionslampen mangelt es jedoch insbesondere an der Grundfarbe Rot, da die Strahlung des Elementes Lithium überwiegend nicht aus dem Ort der höchsten Leuchtdichte, sondern aus dem Bogenmantel emittiert wird. Zwar kann durch eine Erhöhung des Lithiumanteils der Rotanteil im erzeugten Licht erhöht werden, jedoch ist hierbei zu berücksichtigen, daß Lithium vorwiegend sehr langwellige Emissionen zeigt, also zu einem sehr tiefrotem Anteil führt. Da die spektrale Empfindlichkeit des menschlichen Auges am langwelligen Rand deutlich abnimmt, muß, soweit sich der Rotanteil auf die Lithiumemission stützt, eine entsprechend erhöhte spektrale Leistung erzeugt werden, um den erwünschten Lichtstrom zu erzeugen. Andererseits hat sich herausgestellt, daß die Zugabe von Lithium zu der Lampenfüllung den sogenannten Farbtrennungseffekt verstärkt, d.h. verschiedene Spektralbereiche des erzeugten Lichts werden an verschiedenen Orten in der Lampe erzeugt, was zu einer Verschlechterung der Lichtqualität für Projektionsanwendungen führt, die sich in Farbsäumen an Grenz- oder Randbereichen projizierter Bilder äußert.

Entsprechende Probleme ergeben sich beim Betrieb von Rechteckwechselstromlampen.

**Stand der Technik**

Aus der DE 39 20 675 ist bekannt, zur Erzeugung einer Entladung mit größerer Helligkeit eine Kurzbogen-Entladungslampe mit einem konstanten Basisstrom zu betreiben, dem ein periodischer Impulsstrom überlagert ist. Die Impulsdauer liegt im Bereich von 0,03 bis 3 ms, wobei die Impulspausen zwischen 0,1 und 10 ms variieren. Eine Ansteuerung einer Gleichstrombogenlampe mit einem Signal, dessen Impulspausen in diesem Bereich liegen, würde insbesondere ohne Verwendung eines zusätzlichen Basisstroms beträchtlicher konstanter Amplitude zum Erlöschen der Gleichstrombogenlampe führen. Ein Zusammenhang zwischen Ansteuersignal und Spektrum des erzeugten Lichts kann dieser Druckschrift nicht entnommen werden.

In der EP 0 443 795, der US 5 047 695 sowie der US 5 198 727 werden DC-Entladungen mit überlagerten AC-"ripples" beschrieben, wobei die AC-"ripples" im Frequenzbereich zwischen 20 und 200 kHz zur akustischen Straffung des Bogens liegen.

DE-A-2 705 540 offenbart ein Verfahren zum Betreiben einer Niederdruckfluoreszenzlampe in Röhrenform sowie eine Schaltungsanordnung zum Betreiben einer derartigen Niederdruckfluoreszenzlampe gemäß diesem Verfahren. Dabei wird an die Elektroden der Niederdruckfluoreszenzlampe eine mit Spannungspulsen überlagerte Vorspannung angelegt. Für eine mit Xenon gefüllte Entladungsröhre mit einem Elektrodenabstand von 100 cm beträgt die Vorspannung 800 V, die maximale Pulsspannung 10000 V und die Pulszeitdauer zwischen 0,1 µs und 10 µs. Außerdem offenbart diese Schrift, dass bei Pulsfolgefrequenzen in der Größenordnung von 60 Hz bis 20000 Hz die Pulszeitdauer im allgemeinen im Bereich von etwa 0,1 bis 10% der Pulsfolgeperiode liegt.

US-A-4 904 903 offenbart ein Verfahren zum Betreiben einer Rechteckwechselstrom-Metallhalogenidbogenlampe mit abwechselnd positiven und negativen Impulszügen. Zwischen den einzelnen Impulszügen ist jeweils eine stromlose Pause eingefügt. Für die Zeitdauer zwischen den Impulsen innerhalb eines Zuges kann dieser Schrift ein Wert von 1 ms entnommen werden.

DE-A-3 636 901 offenbart ein Verfahren zum Betreiben einer Rechteckwechselstrom-Natriumdampfentladungslampe mit abwechselnd positiven und negativen Impulszügen. Zwischen den einzelnen Impulszügen ist jeweils eine Pause eingefügt. Die Frequenz der Impulse innerhalb jedes Impulszuges beträgt z.B. zwischen 20 und 50 kHz.

**Darstellung der Erfindung**

Es ist deshalb Aufgabe der vorliegenden Erfindung, ein Verfahren zum Betreiben einer Gleichstrom-Metallhalogenidbogenlampe, insbesondere einer Gleichstrom-Metallhalogenidbogenlampe für Projektionszwecke, bzw. einer Rechteckwechselstromlampe vorzuschlagen, wodurch die photometrischen Daten verbessert werden. Es ist weiterhin Aufgabe der vorliegenden Erfindung, eine zugehörige Schaltungsanordnungen, sowie eine Gleichstromlampe mit einer für den erfindungsgemäßen Betrieb besonders geeigneten Füllung zu beschreiben.

Erfindungsgemäß wird die Aufgabe durch die Merkmale der unabhängigen Ansprüche gelöst.

Der Grundgedanke der Erfindung besteht darin, die Gleichstrom-Metallhalogenidbogenlampe mit einem getakteten Spannungssignal zu betreiben. Dabei wird das Signal zyklisch während eines Zeitraums $T_{ein}$ auf eine Ein-Amplitude und während des nachfolgenden Zeitraums $T_{aus}$ auf eine Spannung von betragsmäßig geringerer Amplitude getaktet.

Vorteilhafterweise beträgt die Zeitdauer $T_{ein}$ zwischen 10 und 100 µs und die Zeitdauer $T_{aus}$ zwischen 1 und 50 µs. Entsprechendes gilt für den erfindungsgemäßen Betrieb von Rechteckwechselstromlampen.

Die Erfindung bietet den Vorteil, die Strahlung des Elementes Lithium oder anderer Elemente der Gruppe 1A, d.h. des Rotanteils, vor der Kathode deutlich anzuheben. Da die Normal-Eichkurve $x_\lambda$ in diesem Spektralgebiet ihr Maximum besitzt, steigt der Normfarbwert x gegenüber y an. Deshalb kann durch Zugabe eines Elements mit Strahlungslinien im Bereich 520 bis 580 nm, z.B. Thallium 535,1 nm, der y-Wert angehoben werden, ohne daß die Planckkurve überschritten wird und der Farbeindruck ins Grünliche abwandert. Mit einer Erhöhung des y-Wertes geht eine Steigerung des Nutzlichtstroms einher. Überraschenderweise ergibt sich beim erfindungsgemäßen Betrieb von Gleichstrom-Metallhalogenidbogenlampen durch die Veränderung der konvektiven Strömungsverhältnisse in der Lampe eine deutliche Verringerung der Elektrodentemperaturen, insbesondere der bei Metall-Halogenid-Gleichstromlampen meist überlasteten Anode. Dies führt zu einer Verbesserung des Lichtstromabfalls mit der Zeit, der sogenannten maintenance, da Schwärzung und Elektrodenrückbrand vermindert werden. Hieraus resultiert eine verlängerte Lebensdauer der Gleichstrombogen-lampe.

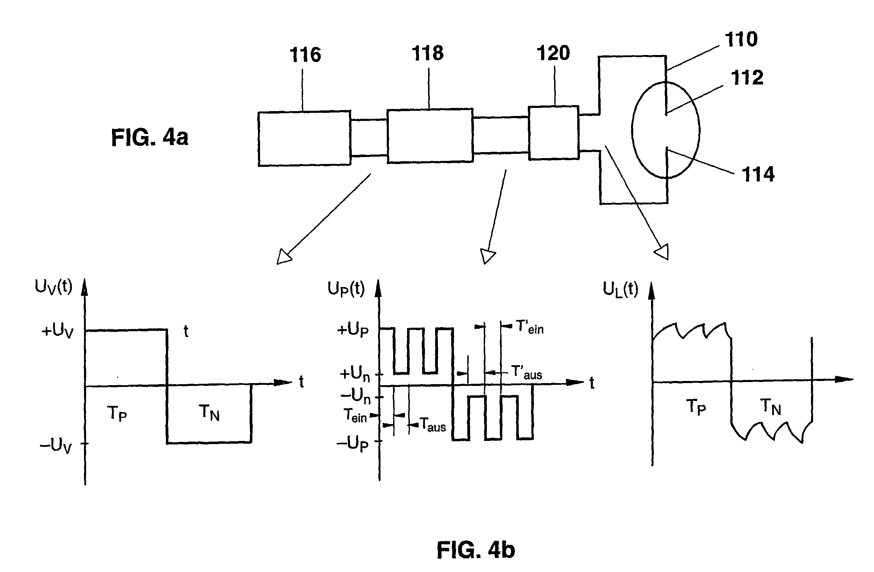

Bei der erfindungsgemäßen Schaltungsanordnung hat es sich als besonders vorteilhaft herausgestellt, den Betrieb des Pulsators so zu wählen, daß im Ausgangssignal des Pulsators die Spannung während der Zeit $T_{aus}$ im wesentlichen 0 V beträgt. Entsprechendes gilt für die erfindungsgemäße Schaltungsanordnung zum Betreiben einer Rechteckwechselstromlampe, d.h. hier sind die Amplitudenwerte $U_n$ und $-U_n$ während der Zeitdauern $T_{aus}$ und $T'_{aus}$, siehe Fig. 4, vorteilhafterweise beide im wesentlichen 0 V.

Zur Verhinderung akustischer Resonanzen kann die Zeitdauer $T_{ein}$ bzw. $T'_{ein}$ periodisch variiert werden, z.B. mit einer Sweepfrequenz von 50 bis 500 Hz, vorzugsweise 100 Hz, gesweept werden. Hierbei kann die Zeitdauer $T_{aus}$ bzw. $T'_{aus}$ konstant sein oder ebenfalls variiert werden. Bei Variation von $T_{aus}$ bzw. $T'_{aus}$ kommt in besonders vorteilhafter Weise eine Variation in Anpassung an die Variation von $T_{ein}$ bzw. $T'_{ein}$ in Betracht, mit dem Ziel, daß der im Signal nach dem Zündgerät für die Ansteuerung der Rechteckwechselstromlampe erzeugte minimale Spannungswert trotz Variation von $T_{ein}$ bzw. $T'_{ein}$ betragsmäßig konstant bleibt. Weitere vorteilhafte Ausführungsformen sind in den Unteransprüchen beschrieben.

**Beschreibung der Zeichnungen**

Es zeigen:

Figur 1a     ein Blockschaltbild einer Schaltungsanordnung zum Betreiben einer Gleichstrom-Metallhalogenidbogenlampe mit einem getakteten Gleichspannungssignal;

Figur 1b     Spannungsverläufe für ein erstes Ausführungsbeispiel an verschiedenen Stellen der Schaltungsanordnung nach Figur 1a;

Figur 1c     Stromverläufe für ein erstes Ausführungsbeispiel an verschiedenen Stellen der Schaltungsanordnung nach Figur 1a;

Figur 2     den Spannungsverlauf nach dem Zündgerät in der Schaltungsanordnung nach Figur 1a für ein zweites Ausführungsbeispiel;

Figur 3     das Reflektorspektrum durch eine 6-mm-Blende für eine ungetaktet betriebene Gleichstrom-Metallhalogenidbogenlampe, deren Füllung kein Thallium enthält, sowie für eine getaktet betriebene Gleichstrom-Metallhalogenidbogenlampe mit $T_{ein}$ = 35 µs und $T_{aus}$ = 13 µs, wobei die Füllung der Gleichstrom-Metallhalogenidbogenlampe Thalliumjodid in einer Konzentration von 0,36 mg/ml enthält.

Figur 4a     ein Blockschaltbild einer Schaltungsanordnung zum Betreiben einer Rechteckwechselstromlampe mit einem untergetakteten Rechtecksignal; und

Figur 4b     Spannungsverläufe an verschiedenen Stellen der Schaltungsanordnung nach Figur 4a.

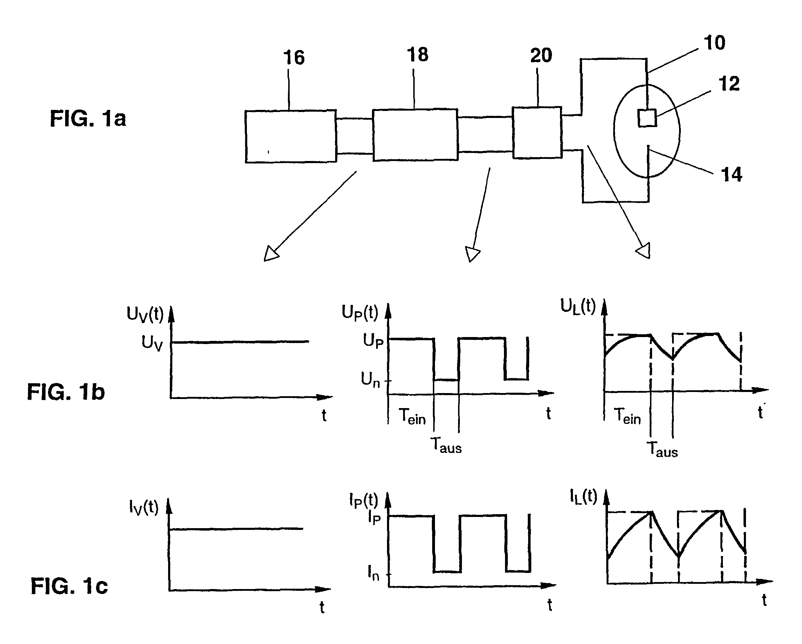

Figur 1a zeigt ein Blockschaltbild einer Schaltungsanordnung zum Betreiben einer Gleichstrom-Metallhalogenidbogenlampe 10, welche eine Anode 12 und eine Kathode 14 umfaßt. Diese Schaltungsanordnung umfaßt ein elektrisches Vorschaltgerät 16, einen Pulsator 18 sowie ein Zündgerät 20.

In Figur 1b ist links der zeitliche Verlauf der Ausgangsspannung nach dem elektrischen Vorschaltgerät 16 dargestellt. Wie zu erkennen ist, ist dies ein Signal mit konstanter Spannung $U_v$. In der Mitte von Figur 1b ist der zeitliche Verlauf der Spannung $U_p(t)$ nach dem Pulsator 18 dargestellt. Während einer Zeitdauer $T_{ein}$ beträgt die Spannung der Amplitude $U_p$, wohingegen sie während einer Zeitdauer $T_{aus}$ $U_n$ beträgt. $U_n$ ist hierbei kleiner als $U_p$, wobei $U_n$ vorzugsweise im wesentlichen 0 V beträgt. Das rechte Diagramm von Figur 1b zeigt den Spannungsverlauf nach dem Zündgerät 20, d.h. den Verlauf der an der Lampe anliegenden Spannung $U_L(t)$. Diese gleicht einem Sägezahnsignal, wobei der Anstieg der Spannung $U_L(t)$ während der Zeit $T_{ein}$ sowie das Abfallen der Spannung $U_L(t)$ während der Zeit $T_{aus}$ hauptsächlich durch die Induktivitäten des Zündgerätes 20 beeinflußt ist. Der beabsichtigte Erfolg stellt sich jedoch auch bei direkter Ansteuerung der Lampe mit einem Rechteckoder Dreiecksignal ein. Wesentlich ist, daß die Pausen, d.h. bei einem Rechtecksignal die Zeiten geringer Spannung bzw. bei einem Sägezahnsignal oder einem Dreiecksignal die Zeiten, in denen die Spannung von einem Maximalwert auf einen Minimalwert abfällt - gegebenenfalls auch nur lokal - im Bereich zwischen 1 und 50 µs liegen. Das die Lampe betreibende Signal $U_L(t)$ kann auch separat erzeugt werden, d.h. ohne den Einfluß des Zündgeräts, z.B. durch ein geeignet getastetes Rechtecksignal oder durch Addition eines Gleichspannungssignals mit einem Sägezahnsignal. Es wird dann zusätzlich zu einem Zündkreis, der für die Zündung der Lampe sorgt und danach nicht mehr verwendet wird, an die Lampe angelegt.

Die drei Diagramme in Figur 1c zeigen von links den zeitlichen Verlauf des Stroms $I_v(t)$ nach dem elektrischen Vorschaltgerät 16, den zeitlichen Verlauf des Stroms $I_p(t)$ nach dem Pulsator 18 bzw. den zeitlichen Verlauf des Stroms $I_L(t)$ nach dem Zündgerät 20, d.h. des über die Lampe fließenden Stroms. Bei dem in den Figuren 1b und 1c dargestellten Ausführungsbeispiel ist die Zeitdauer $T_{ein}$ bzw. die Zeitdauer $T_{aus}$ während des Betriebs der Lampe konstant.

Beim Betrieb der Lampe nach diesem Ausführungsbeispiel wird nach ihrer Zündung und einer gewissen Anlaufzeit, d.h. bis zum Überschreiten einer festgelegten Lampenspannung, durch den Pulsator die konstante Gleichspannung zerhackt. Die Zeitdauer $T_{ein}$ liegt zwischen 10 und 100 µs. Besonders vorteilhafte Ergebnisse zeigten sich für $T_{ein}$ = 35 µs und $T_{aus}$ = 13 µs und $U_n$ = 0 V. Bei verlustlos angenommenem Pulsator und Zündgerät gilt mit T = $T_{ein}$ + $T_{aus}$ folgende Leistungsbilanz:

mittlere Lampenleistung = mittlere Leistung am Pulsator = konstante EVG-Leistung, oder

$$\frac{1}{T}\int_0^T I_L(t)\cdot U_L(t)\,dt = U_p \cdot I_p \cdot \frac{T_{ein}}{(T_{aus}+T_{ein})} + U_n \cdot I_n \cdot \frac{T_{aus}}{(T_{aus}+T_{ein})} = U_v \cdot I_v$$

Hieraus folgt, daß mit steigender Auszeit $T_{aus}$ die Amplitude von gepulstem Lampenstrom und gepulster Lampenspannung ansteigt.

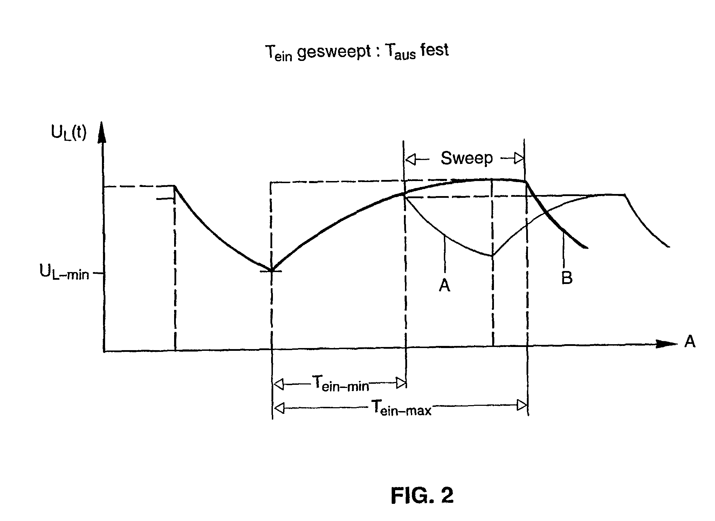

In Figur 2 ist beispielhaft der zeitliche Verlauf der Spannung $U_L(t)$ für ein zweites Ausführungsbeispiel schematisch dargestellt. Bei diesem Ausführungsbeispiel ist die Schaltungsanordnung gemäß Figur 1a um eine Vorrichtung ergänzt, die es ermöglicht, die Zeitdauer $T_{ein}$ zwischen einem Minimalwert $T_{ein\_min}$ und einem Maximalwert $T_{ein\_max}$ zu variieren, d.h. beispielsweise mit einer Frequenz F kontinuierlich zwischen $T_{ein\_min}$ und $T_{ein\_max}$ durchzusweepen. Der mit A bezeichnete Kurvenzug zeigt den Verlauf der Spannung $U_L(t)$ zu Beginn einer Sweepperiode, während der mit B gekennzeichnete Kurvenzug den Verlauf der Spannung $U_L(t)$ zum Ende einer Periodendauer der Sweepfrequenz F zeigt. Die Sweepfrequenz F beträgt typischerweise zwischen 50 und 500 Hz, vorzugsweise 100 Hz. Durch diese Betriebsweise lassen sich akustische Resonanzen verhindern.

In nicht dargestellten Ausführungsbeispielen kann $T_{ein}$ konstant sein, während $T_{aus}$ mit einer Sweepfrequenz F zwischen $T_{aus\_min}$ und $T_{aus\_max}$ variiert wird, während in einem weiteren Ausführungsbeispiel sowohl $T_{ein}$ als auch $T_{aus}$ mit einer Sweepfrequenz F variiert werden. Hierbei kann das Verhältnis von $T_{ein}$ und $T_{aus}$ jeweils so eingestellt werden, daß der resultierende Minimalwert $U_{L\,min}$ während des gesamten Betriebs konstant ist.

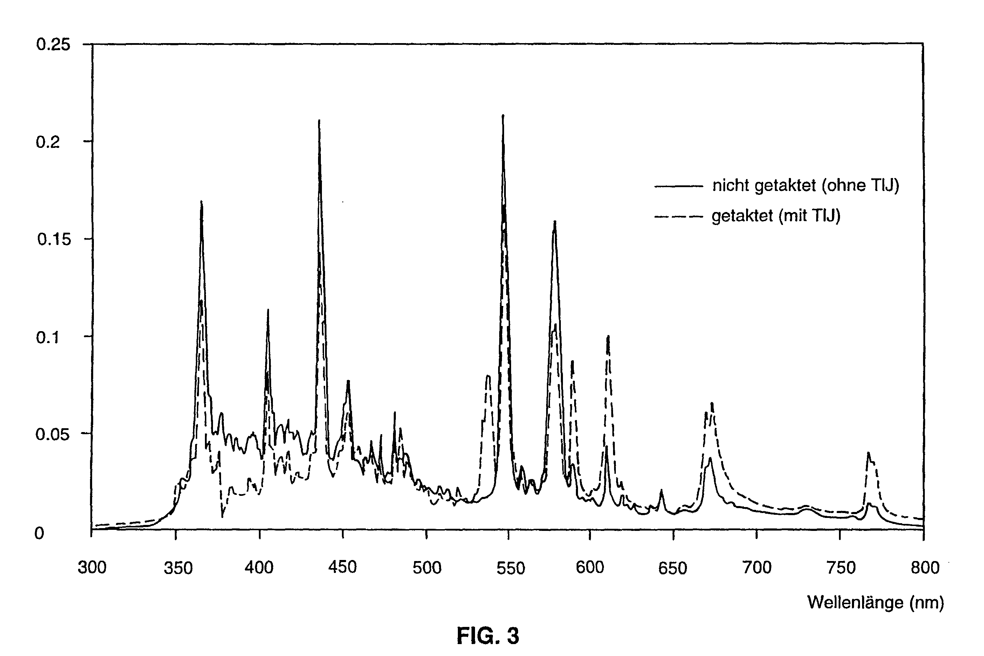

In Figur 3 ist das Reflektorspektrum durch eine 6-mm-Blende für zwei unterschiedlich betriebene und gefüllte Gleichstrom-Metallhalogenidbogenlampen dargestellt. Während der dick gezeichnete Verlauf das Spektrum einer Gleichstrom-Metallhalogenidbogenlampe zeigt, die gemäß dem Stand der Technik, also nicht getaktet, betrieben wird, und deren Füllung kein Thalliumjodid enthält, zeigt der dünn dargestellte Verlauf das Spektrum bei getaktetem Betrieb, d.h. vorliegend für $T_{ein}$ = 35 µs und $T_{aus}$ = 13 µs, wobei die Füllung der Lampe Thalliumjodid in einer Konzentration von 0,36 mg/ml enthält. Es fällt auf, daß durch den getakteten Betrieb die Strahlung des Elements Lithium insbesondere bei 610,3 nm, aber auch bei 670,7 nm deutlich angehoben ist. Da die Normal-Eichkurve $x_\lambda$ in diesem Spektralgebiet ein Maximum besitzt, steigt der Normfarbwert x gegenüber y an. Deshalb kann durch Zugabe eines Elements mit Strahlungslinien im Bereich 510 bis 580 nm, vorliegend Thallium 535,1 nm, der y-Wert angehoben werden, ohne daß die Planckkurve überschritten wird und der Farbeindruck ins Grünliche abwandert. Aus der Erhöhung des y-Wertes resultiert eine Steigerung des Nutzlichtstroms.

Für eine Gleichstrom-Metallhalogenidbogenlampe mit einer Leistung von 270 W, einer Brennspannung von ca. 40 V, einem Elektrodenabstand von 1,9 mm, einem Lampenvolumen von 0,7 ml, einer Wandbelastung von 65 W/$cm^2$, einer Lebensdauer von ca. 2000 Std. mit folgender Füllung 23,5 mg Hg, 200 mbar Argon, 0,51 mg $HgBr_2$, 0,05 mg InJ, 0,08 mg LiJ, 0,19 mg $ZnJ_2$, 0,07 mg Gd und 0,05 mg Y wurde bei nichtgetakteter Betriebsweise eine Farbtemperatur von ca. 9000 K erzielt, sowie ein Farbort von x = 0,28, y = 0,32.

Bei nichtgetakteter Betriebsweise beträgt die Farbtemperatur einer Lampe mit derselben Füllung, ergänzt um einen zusätzlichen Bestandteil an Thalliumjodid von 0,25 mg, ca. 8000 K, der Farbort x = 0,29, y = 0,34, während bei getakteter Betriebsweise dieser Lampe mit $T_{ein}$ = 35 µs, $T_{aus}$ = 13 µs und $U_n$ = 0 V die Farbtemperatur ca. 6000 K beträgt und der Farbort x = 0,32, y = 0,34. Durch die Erhöhung des y-Wertes steigt der Nutzlichtstrom um ca. 5 bis 10 %.

Die Konzentration von Lithium, das vorzugsweise in Form von Lithiumjodid oder -bromid zugegeben wird, beträgt 0,2 µmol/ml bis 5 µmol/ml.

Die Konzentration von Thallium, das vorzugsweise in Form von Thalliumjodid oder -bromid zugegeben wird, kann bis zu einem Wert von 3 µmol/ml betragen, vorzugsweise zwischen 0,6 µmol/ml und 3 µmol/ml.

Die erfindungsgemäße Idee, ein über einen längeren Zeitraum mit konstanter Amplitude verlaufendes Signal auf eine Spannung von betragsmäßig geringerer Amplitude zu takten, läßt sich erfindungsgemäß auch auf den Betrieb von Rechteckwechselstromlampen anwenden, wobei die Zeitdauern geringerer Spannung auch hier erfindungsgemäß zwischen 1 und 50 µs liegen. Figur 4a zeigt eine Schaltungsanordnung zum Betreiben einer Rechteckwechselstromlampe. Auf ein Vorschaltgerät 116 folgt ein Pulsator 118, dem sich ein Zündgerät 120 anschließt. Die Rechteckwechselstromlampe ist mit 110 bezeichnet und umfaßt zwei identische Elektroden 112,114.

Figur 4b zeigt als Ausgangssignal des Vorschaltgeräts 116 ein Rechteckwechselsignal, das während einer Zeitdauer $T_P$ eine Spannungsamplitude von +$U_v$ hat und während einer Zeitdauer $T_N$ eine Spannungsamplitude von -$U_v$. Das Signal nach dem Pulsator 118 zeichnet sich dadurch aus, daß die Spannung sowohl während der Zeitdauer $T_P$ als auch während der Zeitdauer $T_N$ zerhackt ist. Das heißt, innerhalb der Zeitdauer $T_P$ existieren Bereiche mit Zeitdauern $T_{ein}$, während derer das Signal die Amplitude +$U_p$ hat, und Bereiche der Dauer $T_{aus}$, während derer das Signal die Amplitude +$U_n$ hat, bzw. innerhalb des Bereichs $T_N$ existieren Bereiche der Zeitdauer $T'_{ein}$, während derer die Spannung die Amplitude -$U_p$ hat, und Bereiche $T'_{aus}$, während derer die Spannung die Amplitude -$U_n$ hat. Hierbei ist der Betrag von $U_n$ kleiner als der Betrag von $U_p$, wobei besonders vorteilhaft $U_n$ = -$U_n$ = 0 V ist. Anstelle konstanter Werte für $U_n$ und $U_p$ kommen auch sich nicht überlappende Amplitudenbereiche in Betracht. Das Signal nach dem Zündgerät 120, d.h. das Signal, das an der Lampe anliegt, zeichnet sich durch einen sägezahnartigen Verlauf sowohl im positiven Spannungsbereich also im negativen Spannungsbereich aus. Alternativ kann auch ein zerhacktes Rechteckwechselsignal, ähnlich der Darstellung in Fig. 4b Mitte, bzw. ein Signal, das anstelle der Rechtecke der Dauern $T_{ein}$, $T_{aus}$, $T'_{ein}$ bzw. $T'_{aus}$ dreieckförmigen Verlauf aufweist, verwendet werden. Wesentlich ist, daß die Zeitdauern $T_{aus}$ bzw. $T'_{aus}$, d.h. die Zeitdauern geringerer Amplitude bzw. des Abfallens von einem - gegebenenfalls lokalen - Maximum zu einem - gegebenenfalls lokalen - Minimum im Bereich positiver Spannung und entsprechend im Bereich negativer Spannung im Bereich zwischen 1 und 50 µs liegen.

Auch hier kann das die Lampe im Betrieb ansteuernde Signal separat erzeugt werden und erst nach der Zündung der Lampe zugeführt werden. $U_L$(t) kann beispielsweise durch Addition eines Rechteckwechselsignals und eines Sägezahnsignals erzeugt werden.

Die Zeitdauern $T_{ein}$ bzw. $T'_{ein}$ liegen vorzugsweise zwischen 10 und 100 µs. Wie bei dem Verfahren zum Betreiben einer Gleichstrom-Metallhalogenidbogenlampe können auch hier $T_{ein}$, $T'_{ein}$, $T_{aus}$ bzw. $T'_{aus}$ unabhängig voneinander konstant sein oder mit der Zeit variiert werden. Die Summe aus $T_P$ und $T_N$ ergibt eine Frequenz $F_R$ in der Größenordnung von 50 bis 600 Hz. Bei Variation der Unterzeitdauern $T_{ein}$, $T'_{ein}$, $T_{aus}$ bzw. $T'_{aus}$ kann die zeitliche Variation auf die Frequenz $F_R$ abgestimmt sein, vorzugsweise so, daß während der Zeitdauer $T_P$ bzw. $T_N$ eine komplette Periode der Sweepfrequenz F ablaufen kann. Die Sweepfrequenz F beträgt zwischen 50 und 1500 Hz.

Eine weitere Ausgestaltung sieht vor, lediglich die Spannung während der Zeitdauer $T_P$ bzw. lediglich die Spannung während der Zeitdauer $T_N$ zu zerhacken und die jeweils andere Spannung unzerhackt zu lassen.

**Patentansprüche**

1. Verfahren zum Betreiben einer Gleichstrom-Metallhalogenidbogenlampe mit asymmetrischen Elektroden (12, 14) und mit einer ionisierbaren Füllung,
   **dadurch gekennzeichnet,**
   **daß** die Gleichstrom-Metallhalogenidbogenlampe erst nach ihrem Zünden mit einem periodischen getakteten Signal ($U_L$(t)) angesteuert wird, wobei die Zeitdauer $T_{aus}$ zwischen dem Beginn des Abfallens von einem Maximalwert und dem darauffolgenden Ansteigen der Signalamplitude zwischen 1 und 50 µs beträgt.

2. Verfahren nach Anspruch 1, zum Betreiben einer Gleichstrom-Metallhalogenidbogenlampe deren Füllung kein Natrium enthält.

3.  Verfahren nach einem der vorstehenden Ansprüche, zum Betreiben einer Gleichstrom-Metallhalogenidbogenlampe deren Füllung mindestens ein Element der Gruppe A1, insbesondere Lithium enthält.

4.  Verfahren nach einem der vorstehenden Ansprüche,
    **dadurch gekennzeichnet,**
    **daß** die Zeitdauer $T_{ein}$ zwischen zwei aufeinanderfolgenden Zeitdauern $T_{aus}$ zwischen 10 und 100 µs beträgt.

5.  Verfahren nach einem der vorstehenden Ansprüche,
    **dadurch gekennzeichnet,**
    **daß** die Zeitdauer $T_{ein}$ mit einer Frequenz F in einem Bereich von $T_{ein\_min}$ und $T_{ein\_max}$ durchgesweept wird.

6.  Verfahren nach einem der vorstehenden Ansprüche,
    **dadurch gekennzeichnet,**
    **daß** die Zeitdauer $T_{aus}$ mit einer Frequenz F in einem Bereich von $T_{aus\_min}$ und $T_{aus\_max}$ durchgesweept wird.

7.  Verfahren nach Anspruch 5 oder 6,
    **dadurch gekennzeichnet,**
    **daß** die Sweepfrequenz F zwischen 50 und 500 Hz beträgt.

8.  Verfahren nach einem der vorhergehenden Ansprüche,
    **dadurch gekennzeichnet,**
    **daß** der Minimalwert des Signals ($U_L(t)$) größer als 0 V ist.

9.  Verfahren nach einem der Ansprüche 1 bis 8,
    **dadurch gekennzeichnet,**
    **daß** die Füllung der Metallhalogenidbogenlampe zumindest folgende Bestandteile umfaßt:

    -   ein Zündgas,
    -   Quecksilber,
    -   ein Halogen, und
    -   Lithium in einer Konzentration von 0,2 µmol/ml bis 5 µmol/ml, und

    einen zusätzlichen Bestandteil an Thallium in einer Konzentration von 0,6 µmol/ml bis 3 µmol/ml.

10. Schaltungsanordnung mit einer Gleichstrom-Metallhalogenidbogenlampe mit asymmetrischen Elektroden (12, 14), einem elektrischen Vorschaltgerät und einem Zündgerät,
    **dadurch gekennzeichnet,**
    **daß** zwischen elektrischem Vorschaltgerät und Zündgerät ein Pulsator geschaltet ist, wobei der Pulsator ausgelegt ist, an seinem Ausgang ein getaktetes Gleichspannungssignal ($U_p(t)$) bereitzustellen, das während einer ersten Zeitdauer $T_{ein}$ eine Spannung in einem ersten Bereich ($U_p$) und während einer zweiten Zeitdauer $T_{aus}$ eine Spannung in einem zweiten Bereich ($U_n$) hat, wobei die Spannungswerte im zweiten Bereich kleiner als die Spannungswerte im ersten Bereich sind und wobei $T_{aus}$ zwischen 1 und 50 µs beträgt.

11. Schaltungsanordnung nach Anspruch 10,
    **dadurch gekennzeichnet,**
    **daß** die Zeitdauer $T_{ein}$ zwischen 10 und 100 µs beträgt.

12. Schaltungsanordnung nach einem der Ansprüche 10 oder 11,
    **dadurch gekennzeichnet,**
    **daß** sie eine Vorrichtung umfaßt, mit der die Zeitdauer $T_{ein}$ mit einer Frequenz F in einem Bereich von $T_{ein\_min}$ und $T_{ein\_max}$ durchsweepbar ist.

13. Schaltungsanordnung nach einem der Ansprüche 10 bis 12,
    **dadurch gekennzeichnet,**
    **daß** sie eine Vorrichtung umfaßt, mit der die Zeitdauer $T_{aus}$ mit einer Frequenz F in einem Bereich von $T_{aus\_min}$ und $T_{aus\_max}$ durchsweepbar ist.

**14.** Schaltungsanordnung nach Anspruch 12 oder 13,
**dadurch gekennzeichnet,**
**daß** die Sweepfrequenz F zwischen 50 und 500 Hz beträgt.

**15.** Schaltungsanordnung nach einem der Ansprüche 10 bis 14,
**dadurch gekennzeichnet,**
**daß** die Spannung im zweiten Bereich im wesentlichen 0 V beträgt.

**16.** Schaltungsanordnung nach einem der Ansprüche 10 bis 15,
**dadurch gekennzeichnet,**
**daß** die Füllung der Metallhalogenidbogenlampe zumindest folgende Bestandteile umfaßt:

- ein Zündgas,
- Quecksilber,
- ein Halogen, und
- Lithium in einer Konzentration von 0,2 $\mu$mol/ml bis 5 $\mu$mol/ml, und

einen zusätzlichen Bestandteil an Thallium in einer Konzentration von 0,6 $\mu$mol/ml bis 3 $\mu$mol/ml.

**17.** Verfahren zum Betreiben einer Rechteckwechselstrom-Metallhalogenidbogenlampe,
wobei die Rechteckwechselstrom- Metallhalogenidbogenlampe mit einem Signal ($U_L$(t)) mit einer Amplitude größer oder gleich 0 während einer ersten Zeitdauer ($T_P$) und einer Amplitude kleiner oder gleich 0 während einer zweiten Zeitdauer ($T_N$) angesteuert wird, wobei das Signal ($U_L$(t)) innerhalb der ersten Zeitdauer ($T_P$) n Bereiche aufweist, $n \geq 1$, und/oder innerhalb der zweiten Zeitdauer ($T_N$) m Bereiche aufweist, $m \geq 1$, in denen der Absolutbetrag der Signalamplitude kleiner ist als der Absolutbetrag der maximalen Signalamplitude innerhalb der zugehörigen Zeitdauer ($T_P$; $T_N$), wobei im Bereich $T_P$ die Zeitdauer $T_{aus}$ zwischen dem Beginn des Abfallens von einem Maximalwert und dem darauffolgenden Ansteigen der Signalamplitude bzw. im Bereich $T_N$ die Zeitdauer $T'_{aus}$ zwischen dem Beginn des Ansteigens von einem Minimalwert und dem darauffolgenden Abfallen der Signalamplitude zwischen 1 und 50 $\mu$s beträgt,
**dadurch gekennzeichnet,**
**daß** das Signal ($U_L$(t)) keine Impulspausen zwischen zwei aufeinander folgenden Zeitdauern ($T_P$, $T_N$) aufweist und der Rechteckwechselstrom-Metallhalogenidbogenlampe erst nach ihrem Zünden zugeführt wird.

**18.** Verfahren nach Anspruch 17,
**dadurch gekennzeichnet,**
**daß** die Zeitdauer $T_{ein}$ bzw. $T'_{ein}$ zwischen zwei aufeinanderfolgenden Zeitdauern $T_{aus}$ bzw. $T'_{aus}$ zwischen 10 und 100 $\mu$s beträgt.

**19.** Verfahren nach Anspruch 17 oder 18,
**dadurch gekennzeichnet,**
**daß** die Zeitdauer $T_{ein}$ bzw. $T'_{ein}$ mit einer Frequenz F in einem Bereich von $T_{ein\_min}$ und $T_{ein\_max}$ durchgesweept wird.

**20.** Verfahren nach einem der Ansprüche 17 bis 19,
**dadurch gekennzeichnet,**
**daß** die Zeitdauer $T_{aus}$ bzw. $T'_{aus}$ mit einer Frequenz F in einem Bereich von $T_{aus\_min}$ und $T_{aus\_max}$ durchgesweept wird.

**21.** Verfahren nach Anspruch 19 oder 20,
**dadurch gekennzeichnet,**
**daß** die Sweepfrequenz F zwischen 50 und 1500 Hz beträgt.

**Claims**

**1.** Method for operating a DC metal halide arc lamp with asymmetric electrodes (12, 14) and with an ionizable filling,
**characterized in that** the DC metal halide arc lamp is driven with the aid of a periodic clocked signal ($U_L$(t)) only after starting, the period $T_{aus}$ between the beginning of the drop from a maximum value and the subsequent rise in the signal amplitude being between 1 and 50 μs.

**2.** Method according to Claim 1, for operating a DC metal halide arc lamp, the filling of which contains no sodium.

**3.** Method according to one of the preceding claims, for operating a DC metal halide arc lamp, the filling of which contains at least one element of the group A1, in particular lithium.

**4.** Method according to one of the preceding claims, **characterized in that** the period $T_{ein}$ between two consecutive periods $T_{aus}$ is between 10 and 100 μs.

**5.** Method according to one of the preceding claims, **characterized in that** the period $T_{ein}$ is swept through with a frequency F in a region of $T_{ein\_min}$ and $T_{ein\_max}$.

**6.** Method according to one of the preceding claims, **characterized in that** the period $T_{aus}$ is swept through with a frequency F in a region of $T_{aus\_min}$ and $T_{aus\_max}$.

**7.** Method according to Claim 5 or 6, **characterized in that** the sweep frequency F is between 50 and 500 Hz.

**8.** Method according to one of the preceding claims, **characterized in that** the minimum value of the signal ($U_L(t)$) is greater than 0 V.

**9.** Method according to one of Claims 1 to 8,
**characterized in that** the filling of the metal halide arc lamp comprises at least the following constituents:

- a starting gas,
- mercury,
- a halogen, and
- lithium in a concentration of from 0.2 μmol/ml to 5 μmol/ml, and

an additional constituent of thallium in a concentration of from 0.6 μmol/ml to 3 μmol/ml.

**10.** Circuit arrangement with a DC metal halide arc lamp with asymmetric electrodes (12, 14), an electric ballast and a starter, **characterized in that** a pulsator is connected between the electric ballast and starter, the pulsator being designed to provide at its output a clocked DC voltage signal ($U_p(t)$) which has a voltage in a first region ($U_p$) during a first period $T_{ein}$, and a voltage in a second region ($U_n$) during a second period $T_{aus}$, the voltage values in the second region being smaller than the voltage values in the first region, and $T_{aus}$ being between 1 and 50 μs.

**11.** Circuit arrangement according to Claim 10, **characterized in that** the period $T_{ein}$ is between 10 and 100 μs.

**12.** Circuit arrangement according to one of Claims 10 or 11, **characterized in that** it comprises a device with the aid of which it is possible to sweep through the period $T_{ein}$ with a frequency F in a region of $T_{ein\_min}$ and $T_{ein\_max}$.

**13.** Circuit arrangement according to one of Claims 10 to 12, **characterized in that** it comprises a device with the aid of which it is possible to sweep through the period $T_{aus}$ with a frequency F in the region of $T_{aus\_min}$ and $T_{aus\_max}$.

**14.** Circuit arrangement according to Claim 12 or 13, **characterized in that** the sweep frequency F is between 50 and 500 Hz.

**15.** Circuit arrangement according to one of Claims 10 to 14, **characterized in that** the voltage in the second region is essentially 0 V.

**16.** Circuit arrangement according to one of Claims 10 to 15, **characterized in that** the filling of the metal halide arc lamp comprises at least the following constituents:

- a starting gas,
- mercury,
- a halogen, and
- lithium in a concentration of from 0.2 μmol/ml to 5 μmol/ml, and

an additional constituent of thallium in a concentration of from 0.6 µmol/ml to 3 µmol/ml.

17. Method for operating a square-wave AC metal halide arc lamp, the square-wave AC metal halide arc lamp being driven with the aid of a signal ($U_L(t)$) with an amplitude of greater than or equal to 0 during a first period ($T_P$) and an amplitude of less than or equal to 0 during a second period ($T_N$), within the first period ($T_P$) the signal ($U_L(t)$) having n regions, $n \geq 1$, and/or within the second period ($T_N$) having m regions, $m \geq 1$, in which the absolute value of the signal amplitude is smaller than the absolute value of the maximum signal amplitude within the associated period ($T_P; T_N$), the period $T_{aus}$ between the beginning of the drop from a maximum value and the subsequent rise in the signal amplitude is between 1 and 50 µs in the region $T_P$, and the period $T'_{aus}$ between the beginning of the rise from a minimum value and the subsequent drop in the signal amplitude is between 1 and 50 µs in the region $T_N$, **characterized in that** the signal ($U_L(t)$) has no interpulse periods between two consecutive periods ($T_P$, $T_N$) and is fed to the square-wave AC metal halide arc lamp only after starting.

18. Method according to Claim 17, **characterized in that** the period $T_{ein}$ or $T'_{ein}$, respectively, between two consecutive periods $T_{aus}$ or $T'_{aus}$, respectively, is between 10 and 100 µs.

19. Method according to Claim 17 or 18, **characterized in that** the period $T_{ein}$ or $T'_{ein}$, respectively, is swept through with a frequency F in a region of $T_{ein\_min}$ and $T_{ein\_max}$.

20. Method according to one of Claims 17 to 19, **characterized in that** the period $T_{aus}$ or $T'_{aus}$, respectively, is swept through with a frequency F in a region of $T_{aus\_min}$ and $T_{aus\_max}$.

21. Method according to Claim 19 or 20, **characterized in that** the sweep frequency F is between 50 and 1500 Hz.

## Revendications

1. Procédé pour faire fonctionner une lampe à arc à halogénures métalliques à courant continu ayant des électrodes (12, 14) dissymétriques et une atmosphère ionisable, **caractérisé**
   **en ce qu'**il consiste à commander la lampe à arc à halogénures métalliques à courant continu seulement après son amorçage par un signal ($U_L(t)$) cadencé, la durée $T_{aus}$ comprise entre le début de la décroissance à partir d'une valeur maximum et la croissance venant ensuite de l'amplitude du signal étant comprise entre 1 et 50 µs.

2. Procédé suivant la revendication 1, pour faire fonctionner une lampe à arc à halogénures métalliques à courant continu dont l'atmosphère ne contient pas de sodium.

3. Procédé suivant l'une des revendications précédentes, pour faire fonctionner une lampe à arc à halogénures métalliques à courant continu dont l'atmosphère contient au moins un élément du groupe A, notamment du lithium.

4. Procédé suivant l'une des revendications précédentes, **caractérisé**
   **en ce que** la durée $T_{ein}$ comprise entre deux durées $T_{aus}$ successives est comprise entre 10 et 100 µs.

5. Procédé suivant l'une des revendications précédentes, **caractérisé**
   **en ce que** la durée $T_{ein}$ est balayée à une fréquence F dans un intervalle de $T_{ein\_min}$ à $T_{ein\_max}$.

6. Procédé suivant l'une des revendications précédentes, **caractérisé**
   **en ce que** la durée $T_{aus}$ est balayée à une fréquence F dans un domaine de $T_{aus\_min}$ à $T_{aus\_max}$.

7. Procédé suivant la revendication 5 ou 6, **caractérisé**
   **en ce que** la fréquence F de balayage est comprise entre 50 et 500 Hz.

8. Procédé suivant l'une des revendications précédentes, **caractérisé**
   **en ce que** la valeur minimale du signal ($U_L(t)$) est supérieure à 0 V.

9. Procédé suivant l'une des revendications 1 à 8, **caractérisé**
   **en ce que** l'atmosphère de la lampe à arc à halogénures métalliques comprend au moins les constituants suivants :

- un gaz d'amorçage,
- du mercure,
- un halogène et
- du lithium en une concentration de 0,2 μmole/ml à 5 μmole/ml et

un constituant supplémentaire de thallium en une concentration de 0,6 μmole/ml à 3 μmole/ml.

**10.** Circuit comprenant une lampe à arc à halogénure métallique en courant continu ayant des électrodes (12, 14) dissymétriques, un ballast électrique et un appareil d'amorçage, **caractérisé en ce qu'**il est monté entre le ballast électrique et l'appareil d'amorçage un pulsateur, le pulsateur étant conçu pour mettre à disposition à sa sortie un signal ($U_p$)t)) de tension continue cadencé qui a pendant une première durée $T_{ein}$ une tension dans un premier intervalle ($U_p$) et pendant une deuxième durée $T_{aus}$ une tension dans un deuxième intervalle ($U_n$), les valeurs de tension dans le deuxième intervalle étant plus petites que les valeurs de tension dans le premier intervalle et $T_{aus}$ étant compris entre 1 et 50 μs.

**11.** Circuit suivant la revendication 10, **caractérisé en ce que** la durée $T_{ein}$ est comprise entre 10 et 100 μs.

**12.** Circuit suivant l'une des revendications 10 ou 11, **caractérisé en ce qu'**il comprend un dispositif par lequel la durée $T_{ein}$ peut être balayée à une fréquence F dans un intervalle de $T_{ein\_min}$ à $T_{ein\_max}$.

**13.** Circuit suivant l'une des revendications 10 à 12, **caractérisé en ce qu'**il comprend un dispositif par lequel la durée $T_{aus}$ est balayée à une fréquence F dans un intervalle de $T_{aus\_min}$ à $T_{aus\_max}$.

**14.** Circuit suivant la revendication 12 ou 13, **caractérisé en ce que** la fréquence F de balayage est comprise entre 50 et 500 Hz.

**15.** Circuit suivant l'une des revendications 10 à 14, **caractérisé en ce que** la tension dans le deuxième intervalle est sensiblement 0 V.

**16.** Circuit suivant l'une des revendications 10 à 15, **caractérisé en ce que** l'atmosphère de la lampe à arc à halogénures métalliques comprend au moins les constituants suivants :

- un gaz d'amorçage,
- du mercure,
- un halogène et
- du lithium en une concentration de 0,2 μmole/ml à 5 μmole/ml et

un constituant supplémentaire de thallium en une concentration de 0,6 μmole/ml à 3 μmole/ml.

**17.** Procédé pour faire fonctionner une lampe à arc à halogénures métalliques à courant alternatif rectangulaire, qui consiste à commander la lampe à arc à halogénures métalliques à courant alternatif rectangulaire par un signal ($U_L$(t)) ayant une amplitude supérieure ou égale à 0 pendant une première durée ($T_p$) et une amplitude inférieure ou égale à 0 pendant une deuxième durée ($T_N$), le signal ($U_L$(t)) présentant dans la première durée ($T_p$) n zones, $n \geq 1$ et/ou dans la deuxième durée ($T_N$) m zones, $m \geq 1$, dans lesquelles la valeur absolue de l'amplitude du signal est inférieure à la valeur absolue de l'amplitude maximum du signal dans la durée ($T_p$ ; $T_N$) associée, dans lequel dans l'intervalle $T_p$, la durée $T_{aus}$ comprise entre le début de la décroissance à partir d'une valeur maximum et de la croissance venant ensuite de l'amplitude du signal ou dans l'intervalle $T_N$, la durée $T'_{aus}$ comprise entre le début de la croissance à partir d'une valeur minimale et la décroissance venant ensuite de l'amplitude du signal est comprise entre 1 et 50 μs, **caractérisé en ce que** le signal ($U_L$(t)) ne présente pas de pause entre les impulsions entre deux durées ($T_p$, $T_N$) successives et n'est envoyé à la lampe à arc à halogénures métalliques à courant alternatif rectangulaire qu'après son amorçage.

**18.** Procédé suivant la revendication 17, **caractérisé**

en ce que en ce que la durée $T_{ein}$ ou $T'_{ein}$ comprise entre deux durées $T_{aus}$ ou $T'_{aus}$ successives est comprise entre 10 et 100 µs.

19. Circuit suivant la revendication 17 ou 18, **caractérisé**
en ce que la durée $T_{ein}$ ou $T'_{ein}$ est balayée à une fréquence F dans un intervalle de $T_{ein\_min}$ à $T_{ein\_max}$.

20. Circuit suivant l'une des revendications 17 à 19, **caractérisé**
en ce que la durée $T_{aus}$ ou $T'_{aus}$ est balayée à une fréquence F dans un intervalle de $T_{aus\_min}$ à $T_{aus\_max}$.

21. Circuit suivant la revendication 19 ou 20, **caractérisé**
en ce que la fréquence F de balayage est comprise entre 50 et 1500 Hz.

**FIG. 1a**

16    18    20    10
                  12
                  14

**FIG. 1b**

$U_V(t)$    $U_P(t)$    $U_L(t)$

$U_V$    $U_P$    
        $U_n$    
t    $T_{ein}$    $T_{ein}$
    $T_{aus}$    $T_{aus}$
    t    t

**FIG. 1c**

$I_V(t)$    $I_P(t)$    $I_L(t)$

        $I_P$
        $I_n$
t    t    t

$T_{ein}$ gesweept : $T_{aus}$ fest

FIG. 2

FIG. 3

FIG. 4a

116    118    120    110
                      112
                      114

$U_V(t)$

$+U_V$    t

$T_P$    $T_N$

$-U_V$    t

$U_P(t)$

$+U_P$    $T'_{ein}$

$+U_n$    $T'_{aus}$

$-U_n$    t

$T_{ein}$    $T_{aus}$

$-U_P$

$U_L(t)$

$T_P$    $T_N$

FIG. 4b

EP 1 002 450 B1